# EUROPEAN PATENT SPECIFICATION

(11) **EP 2 338 812 B1**
(45) Date of publication and mention of the grant of the patent: **14.11.2012**
(21) Application number: 10178039.3
(22) Date of filing: 21.09.2010
(51) Int. Cl.: B65G 21/06, B65G 21/10, B65G 21/16

(54) **A support system for goods conveyor belts.**
Tragesystem für Trennwände für Warenförderbänder
Système de support pour courroies de transport de marchandises

(30) Priority: 23.12.2009 IT TO20091031
(43) Date of publication of application: 29.06.2011
(73) Proprietor: NC Componenti S.p.A., 10090 Rivoli Cascine Vica (TO) (IT)
(72) Inventor: Fundone, Luigi, 10057 Sant'Ambrogio di Torino (TO) (IT)
(74) Representative: Di Gennaro, Sergio

(56) References cited:
- EP-A1- 1 249 406
- EP-A1- 2 050 696
- WO-A1-2004/074142
- US-A- 4 875 573

## Description

The present invention relates to the field of devices for conveying goods of small size and in particular relates to a support system for goods conveyor belt.

It is known that goods of small size are usually conveyed on goods conveyor means which comprise conveyor belts which are moved along fixed guides.

Furthermore, it is known that where these conveyor belts are curved, supporting frames whose size varies according to the radius of curvature are used.

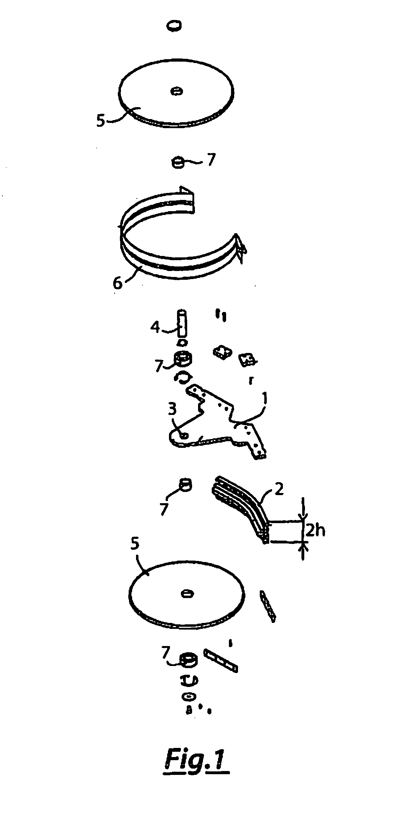

As it is shown in figure 1, support systems 1 of known kind for goods conveyor belts comprise a metal frame 1 which is shaped with a peripheral portion defining a circumferential arch having radius R, to which are fixed goods directing elements 2, substantially orthogonally oriented for their height 2h with respect to the plane on which lies the above-said metal frame 1.

Directing element 2 is fixed to metal frame 1 by means of locking screws arranged around the perimeter within holes made on an external border of the frame itself.

The metal frame is equipped with at least a passing holes 3, centered on the center of the circumferential arch having radius R, adapted to permit the positioning of a rotating shaft 4, operated for example by an electric motor, which is pivoted on one or more rotating discs 5, upon which it is then positioned the goods to be conveyed.

While goods directing element 2 is positioned on an external part of the support system curve, in the internal part of the curve itself is instead positioned a protection case 6, which purpose is to prevent from accidents to people who unwary enter into contact with discs 5 or with other moving parts of the support system. Rotating discs 5 are then moved by lying them upon supporting and/or locking rings 7, which purpose is for example to insulate discs 5 from the non-moving parts, thus realizing a low friction.

EP 1 249 406 A1 discloses a mechanism for diverting a conveyor through an angle according to the preamble of claim 1. This mechanism comprises an upper and lower plate, above which a drive wheel is mounted. The section of the belt traveling towards the mechanism fits against the outer edge of the lower plate and the section leaving it fits against the outer edge of the upper plate. The plates can be swiveled through different angles to each other and refastened together, allowing the conveyor to be diverted through different angles.

WO 2004/074142 A1 discloses an adjustable curved neck guide for a conveyor. The guide comprises a plurality of segments mounted on first and second plates using a series of pin and slot assemblies. Each segment (18) has first and second surfaces and a guide edge, the segments arranged end to end such that the guide edges define a curve having radius. As the second plate is moved relative to the first plate, the pins slide in the slots thereby moving the segments and changing the radius of curvature defined by the guide edges.

US 4 875 573 A discloses a wheel turn bracket assembly which is provided for an article conveying system for coupling inbound and outbound tracks of a moving surface conveyor to inbound and outbound sides respectively of a wheel turn at an angle between said tracks that can be adjustably selected depending upon the angle of the desired turn.

EP 2 050 696 A1 discloses a spiral conveyor with modular or flexible motorized chain for conveying objects between a loading point and an unloading point along a spiral-shaped guide fixed to a supporting structure is described. On a seal inserted along said guide a first series of bearings on the upper part thereof and a second series of bearings in its lower part thereof are mounted essentially parallel, said bearings being adapted to rotationally cooperate with the chain during the outward step and the return step along the same track, and further reacting against the centripetal force of the chain generated by its tensioning.

However, support systems of the known kind have some disadvantages: in particular, depending on the radius of curvature which the goods conveyor belt has to do, it is needed that the size and shape of the supporting frame has to adapt to the different radii of curvature.

Therefore, a support systems manufacturer, in order to offer a range of products adapted to cover all the reasonable radii of curvature for a goods conveyor belt, has to provide for producing frames in multiple size, with considerable costs linked to the design, production and storage of them.

The purpose of the present invention is then to describe a support system for goods conveyor belts which is free from the above described inconvenients.

According to the present invention a support system for goods conveyor belts is realized as claimed in the first claim.

The invention will be now described with reference to the attached drawings, which illustrate a nonlimiting example m of embodiment, wherein:
- figure 1 shows an exploded view of a part of a support system of known kind;
- figure 2 shows an exploded view of a part of a support system for goods conveyor belts according to the present invention;

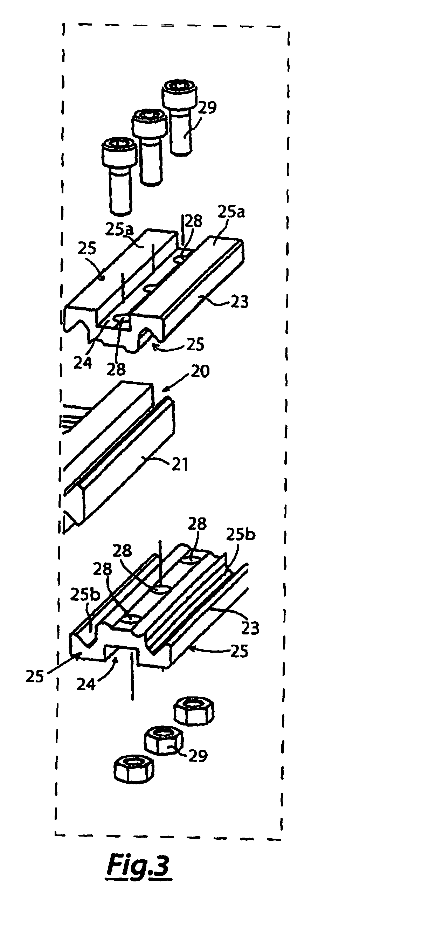

- figure 3 shows an exploded view of a detail of part of figure 2.

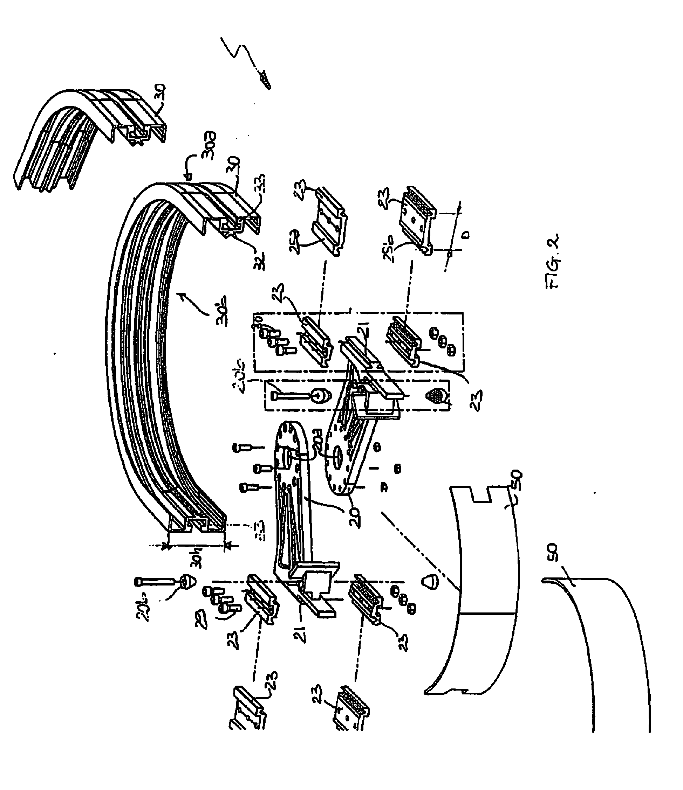

With reference to figure 2, a support system for goods conveyor belts is generally indicated with 10.

Support system 10 comprises:
- a plurality of angular elements 20 in metal material and positioned on respective planes staggered and parallel between them which have a substantially plane surface (possibly equipped with reinforcement ribs) having a central hole 20a and forming a supporting frame; and
- directing means 30, in particular a directing bended beam, fixed to said angular elements 20 and which realize a curved path within which goods positioned,on a rotating disc (not illustrated) are handled.

Directing means 30 form a curved path having the shape of circumferential arch having radius R; this circumference has a center which corresponds to a pair of central holes 20a upon angular elements 20. Upon this path are developed the translations of goods positioned on the conveying belt.

Support system 10 comprises also a plurality of protection carters 50, adapted to prevent that a user unwary enters in contact with rotating parts of the system itself. Protection carters 50 have a first and a second ending upon which there are locking notches; these notches insert on respective vertical supporting surfaces of angular elements 20; then, through joint locking means 20b they provide for pushing and locking carters 50 against these supporting surfaces.

Each of angular elements 20 is provided of a guide 21 upon one of its ending designed to connect with a plurality of brackets 23 which separate and rigidly connect said directing means 30 and said angular elements 20. In particular, guide 21 is a dovetail guide, oriented along a direction parallel to the plane upon which angular element 20 is positioned and substantially tangentially oriented with respect to the circumferential arch formed by the directing means 30.

Brackets 23 comprise a first and a second piece, identical between them, each of which has a substantially rectangular central surface 24, to which are put side by side a pair of symmetrical and parallel lateral wings 25. The two pieces of each bracket 23 are such that they can combine together in such a way as to lock on guide 21.

In particular, lateral wings 25 are positioned on a height staggered with respect to central surface 24 and each one has a first upper surface 25a and a second lower surface 25b. Upper surface 25a is plane whereas the lower one 25b has a section having a profile substantially equal to half of the section of guide 21. Therefore, half of the dovetail section of guide 21 is taken up - in hollow - on the first piece of bracket 23 and the other half (indeed, symmetrical) is instead taken up on the second piece of bracket 23.

The height difference among central surface 24 and lateral wings 25 is such that, when the two pieces of the bracket are coupled, the recess formed by surfaces 25a, 25b of lateral wings 25 has the same size and shape of the dovetail of guide 21 in a play-less way.

Furthermore, on central surface 24 is positioned a plurality of passing holes 28 adapted to permit the docking of the two pieces of bracket 23, preferably through bolts or screws 29. The passing holes 28 are aligned on a straight line.

A distance D between the two lateral wings 25 can be freely varied, thus realizing brackets 23 having higher or lower width.

The directing curved beam has a first lateral surface 30a and a second lateral surface 30b opposed between them and respectively directed towards the internal and external side of the curve created by the directing beam; the first lateral surface is too equipped with a guide 32 having a dovetail section, designed in such a way as to permit to couple with the recess created by lateral wings 25.

In particular, this beam has guide 32 positioned on the second lateral surface 30b (i.e. the internal one) in correspondence to half of height 30h of the beam itself.

Upon the first lateral surface 30a, there is instead an external guide 33 of interface with the conveyor and of accessories locking, positioned in correspondence of half of height 30h of the beam too, which develops upon a groove embedded into lateral surface 30a and which has a rectangular section.

The advantages of the support system for goods conveyor belts are known in the light of the previous description. In particular, it is flexible to the variation of the radius of curvature which can be found in the various models produced by a manufacturer, because with a single realization of supporting frame 10 it is possible to realize curved paths having different radius simply varying distance D between lateral wings 25 of brackets 23.

Therefore, in this way, most of the components comprised in the system object of the present invention can be realized in a unique shape and size (obviously except from the directing means, which the greater is the path of the curve, inevitably the longer); the only components whose size varies for adapting to different radii R of curvature are precisely brackets 23.

Therefore, the system object of the present invention brings to huge advantages from the point of view of production cost containment.

Supporting frame 10 can be realized in a unique swage of a single dimension, which defines a minimal radius R of curvature; all the radii of curvature of the path of the conveyor belt which are to be obtained as bigger with respect to the previous minimum radius, will be easily obtainable using brackets 23 having lateral wings 25 positioned at a distance D proportionally higher.

Furthermore, the asymmetry of lateral wings 25 of brackets 23 is such that they do not have a unique mounting direction, but respectively, they can be indistinctly installed by orienting them upon one of lateral wings 25. Therefore, another advantage of the system according to the present invention is to lead to a greater mounting ease.

To the device up to here described can be applied some variant obvious for a person skilled in the art without departing from the protective scope of the attached claims.

## Claims

1. Support system (10) for goods conveyor belts, said system comprising a supporting frame (20) and directing means (30); said directing means (30) being fixed to said supporting frame and being designed for defining a curved path upon which goods are handled; said supporting frame comprising a plurality of angular elements (20) having a guide (21) designed for coupling with brackets (23), said brackets (23) separating and rigidly connecting said directing means (30) and said angular elements (20), said support system (10) is **characterized in that** it comprises a plurality of connection brackets (23) some of which being positioned between said angular elements (20) and said directing means (30); said brackets presenting a width (D) variable from bracket (23) to bracket (23) and adaptable to different radii of curvature in accordance to the various size of said curved path and defining curved paths of different amplitude.

2. Support system according to claim 1, wherein said guide (21) presents a profile having a dovetail section.

3. Support system according to claim 1, wherein said brackets (23) comprise a first and a second piece identical between them, designed for being coupled between them.

4. Support system according to claims 2 and 3,
wherein each of said first and second piece presents a central surface (23) and a couple of symmetrical lateral wings (25); each of said lateral wings (25) defining a section such that said two first and second piece, coupled, form a couple of recesses taking up the section of said guide (21).

5. Support system according to claim 2, wherein said lateral wings (25) comprise a first and a second surface (25a, 25b) and wherein said second surface (25b) presents a profile equal to half section of said guide (21).

6. Support system according to claim 1, wherein said directing means (30) comprise a first and a second surface (30a, 30b) and wherein on said second surface (30b) there is a central guide (32) designed for coupling with said brackets (23).

7. Support system according to claim 1, wherein said curved path is a circumferential arch having a radius (R).

8. Support system according to claim 1, wherein said angular elements (20) have, each one, a respective central holes (20a).

9. Support system according to claims 7 and 8, wherein said central holes (20a) is made in correspondence with said circumferential arch having radius (R).

## Patentansprüche

1. Tragesystem (10) für Warenförderbänder, wobei das System einen Tragerahmen (20) und Ausrichtmittel (30) umfasst; wobei die Ausrichtmittel (30) am Tragerahmen befestigt sind und so gestaltet sind, um eine gekrümmte Bahn zu definieren, auf welcher die Waren gehandhabt werden; wobei der Tragerahmen eine Mehrzahl von Winkelelementen (20) umfasst, welche eine Führung (21) aufweisen, die zum Kuppeln mit Halterungen (23) gestaltet sind, wobei die Halterungen (23) die Ausrichtmittel (30) und die Winkelelemente (20) trennen und starr verbinden, wobei das System (10) **dadurch gekennzeichnet ist, dass** es eine Mehrzahl von Verbindungshalterungen (23) umfasst, von denen einige zwischen den Winkelelementen (20) und den Ausrichtmitteln (30) positioniert sind; wobei die Halterungen eine Breite (D) vorstellen, welche von Halterung (23) zu Halterung (23) verschieden und an unterschiedliche Krümmungsradien gemäß der verschiedenen Abmessung der gekrümmten Bahn anpassbar ist und gekrümmte Bahnen unterschiedlicher Amplitude definiert.

2. Tragesystem nach Anspruch 1, wobei die Führung (21) ein Profil darstellt, welches einen Schwalbenschwanzabschnitt aufweist.

3. Tragesystem nach Anspruch 1, wobei die Halterungen (23) ein erstes und ein zweites Stück, welche zueinander identisch sind, umfassen, um zwischen ihnen gekoppelt zu werden.

4. Tragesystem nach den Ansprüchen 2 und 3, wobei jedes des ersten und des zweiten Stücks eine zentrale Fläche (23) und eine Anzahl von symmetrischen seitlichen Flügeln (25) vorstellt; wobei jeder der seitlichen Flügel (25) einen Abschnitt definiert, so dass das erste und das zweite Stück, im gekuppelten Zustand, ein paar Vertiefungen ausbilden, um den Schnitt der Führung (21) aufzunehmen.

5. Tragesystem nach Anspruch 2, wobei die seitlichen Flügel (25) eine erste und eine zweite Fläche (25a, 25b) umfassen und wobei die zweite Fläche (25b) ein Profil vorstellt, welches gleich dem Halbschnitt der Führung (21) ist.

6. Tragesystem nach Anspruch 1, wobei die Ausrichtmittel (30) eine erste und eine zweite Fläche (30a, 30b) umfassen und wobei auf der zweiten Fläche (30b) eine zentrale Führung (32) vorhanden ist, welche zum Kuppeln mit den Halterungen (23) gestaltet ist.

7. Tragesystem nach Anspruch 1, wobei die gekrümmte Bahn ein Umfangsbogen ist, welcher einen Radius (R) aufweist.

8. Tragesystem nach Anspruch 1, wobei die Winkelelemente (20) jedes eine jeweilige mittige Bohrung (20a) aufweisen.

9. Tragesystem nach den Ansprüchen 7 und 8, wobei die mittigen Bohrungen (20a) in Übereinstimmung mit dem Umfangsbogen, welcher den Radius (R) aufweist, hergestellt sind.

## Revendications

1. Système de support (10) pour courroies de transport de marchandises, ledit système comprenant un cadre porteur (20) et des moyens directeurs (30) ; lesdits moyens directeurs (30) étant fixés audit cadre porteur et étant conçus pour définir une voie courbée, sur laquelle des marchandises sont manipulées, ledit cadre porteur comprenant une pluralité d'éléments angulaires (20) présentant un guide (21) conçu pour le couplage avec des pattes d'attache (23), lesdites pattes d'attache (23) séparant et reliant rigidement lesdits moyens directeurs (30) et lesdits éléments angulaires (20) ; ledit système de support (10) est **caractérisé en ce qu'**il comprend une pluralité de pattes d'attache (23), dont certaines sont positionnées entre lesdits éléments angulaires (20) et lesdits moyens directeurs (30) ; lesdites pattes d'attache présentant une largeur (D) variable d'une patte d'attache (23) à l'autre et adaptable à différents rayons de courbure selon la taille variée de ladite voie courbée et définissant des voies courbées de différente amplitude.

2. Système de support selon la revendication 1, dans lequel ledit guide (21) présente un profilé doté d'une section en queue-d'aronde.

3. Système de support selon la revendication 1, dans lequel lesdites pattes d'attache (23) comprennent une première et une seconde pièces identiques entre elles, conçues pour être couplées entre elles.

4. Système de support selon les revendications 2 et 3, dans lequel chacune desdites premières et secondes pièces présente une surface centrale (23) et un couple d'ailes latérales symétriques (25) ; chacune desdites ailes latérales (25) définissant une section de sorte que les deux première et seconde pièces couplées forment un couple d'évidements occupant la section dudit guide (21).

5. Système de support selon la revendication 2, dans lequel lesdites ailes latérales (25) comprennent une première et une seconde surfaces (25a, 25b) et dans lequel ladite seconde surface (25b) présente un profilé égal à la demi-section dudit guide (21).

6. Système de support selon la revendication 1, dans lequel lesdits moyens directeurs (30) comprennent une première et une seconde surfaces (30a, 30b) et dans lequel ladite seconde surface (30b) présente un guide central (32) conçu pour le couplage avec lesdites pattes d'attache (23).

7. Système de support selon la revendication 1, dans lequel ladite voie courbée est une arche circonférentielle présentant un rayon (R).

8. Système de support selon la revendication 1, dans lequel lesdits éléments angulaires (20) présentent chacun un trou central respectif (20a).

9. Système de support selon les revendications 7 et 8, dans lequel lesdits trous centraux (20a) sont réalisés de manière à correspondre à ladite arche circonférentielle présentant un rayon (R).
